# EUROPEAN PATENT APPLICATION

(11) **EP 2 136 490 A1**
(43) Date of publication of application: **23.12.2009**
(21) Application number: 09162825.5
(22) Date of filing: 16.06.2009
(51) Int. Cl.: H04B 17/00, H03G 1/02

(54) **Receiving System**

(30) Priority: 16.06.2008 JP 2008157108; 14.05.2009 JP 2009117539
(71) Applicant: Fujitsu Ltd., Kawasaki-shi, Kanagawa 211-8588 (JP)
(72) Inventor: Kato, Atsushi, Kawasaki-shi Kanagawa 211-8588 (JP); Nakano, Yoshiaki, Kawasaki-shi Kanagawa 211-8588 (JP)
(74) Representative: Holtby, Christopher Lawrence

(57) **Abstract**

A receiving system includes a first apparatus and a second apparatus, the first apparatus and the second apparatus being connected through a transmission line. The first apparatus includes an amplifier that amplifies a received signal, the signal amplified being transmitted to the second apparatus; a converting unit that reflects a pilot signal transmitted from the second apparatus through the transmission line and changes characteristics; and a control unit that controls the converting unit based on information obtained by monitoring the amplifier. The second apparatus includes a pilot output unit that outputs the pilot signal; a monitoring unit that monitors the first apparatus based on a level of a synthesized signal synthesized from the pilot signal output from the pilot output unit and a reflected signal that is from the first apparatus and includes the pilot signal reflected at the converting unit.

## Description

### FIELD

The embodiments discussed herein are related to a receiving system.

### BACKGROUND

An apparatus monitoring an outdoor receiving amplifier has been proposed. Such an apparatus monitoring an outdoor receiving apparatus includes: a pilot oscillator that oscillates a pilot signal whose frequency is within an attenuation band of a receiving filter; an adder that is connected to the pilot oscillator, the receiving filter and a receiving amplifier, and adds a received signal to the pilot signal to output an added signal to the receiving amplifier; a branching filter that is connected to both the receiving amplifier and an output terminal, and divides a signal coming from the receiving amplifier into the received signal and the pilot signal; a pilot detector that is connected to the branching filter and detects the pilot signal; and a comparator that compares a detecting voltage with a reference voltage to output a failure signal (see, for example, Japanese Laid-Open Patent Application Publication No. H5-122170 (hereinafter, "Patent Document 1")).

A reception gain monitoring apparatus including an outdoor apparatus and an indoor apparatus monitoring variation of gain of the outdoor apparatus from which a coaxial cable extends to the indoor apparatus has been proposed. The outdoor apparatus includes: a receiving filter that passes a certain received signal among signals received at an antenna; an FET amplifying circuit that includes serially-cascaded field-effect transistors (FET) and amplifies a signal input into a gate of a first FET; a bias circuit that generates a bias voltage supplied to the FET amplifying circuit; a circulator that receives a signal coming from the receiving filter at an input port, outputs the signal to the gate of the first FET of the FET amplifying circuit from an output port, receives the bias voltage supplied to the gate of the first FET at a dummy port, and outputs the bias voltage to the gate of the first FET; a pilot oscillator that generates a pilot signal whose frequency is outside a frequency band of a received signal; and a superposing unit that is connected to the dummy port of the circulator, superposing the pilot signal on the bias voltage, and outputs a signal to the dummy port. The indoor apparatus includes: a branching circuit that extracts a pilot signal from a signal that is amplified by the FET amplifying circuit of the outdoor apparatus and comes through the coaxial cable; and a monitoring unit that detects a level of the pilot signal and monitors variation of gain of the outdoor apparatus (see, for example, Japanese Laid-Open Patent Application Publication No. 2001-24601 (hereinafter, "Patent Document 2")).

A failure detecting apparatus for an outdoor amplifier has been proposed. Such an apparatus includes: transmitting a pilot signal for detection of failure from indoors to outside through a feeder; inputting the pilot signal with received signals to outdoor amplifiers; transmitting output signals from the outdoor amplifiers to the inside through the feeder; splitting the output signals; and detecting a level of the pilot signal and a failure (see, for example, Japanese Laid-Open Patent Application Publication No. 2002-223196 (hereinafter, "Patent Document 3")).

A receiving amplifying apparatus that automatically compensates gain with an indoor amplifying apparatus even when an amplifier of an outdoor amplifying apparatus has failed has been proposed. In such a receiving amplifying apparatus, a first and a second amplifying unit each include: an amplifier that amplifies a high-frequency signal; a failure detecting circuit that monitors a failure of the amplifier and creates information on a failure when detecting the failure; and a bypass circuit that receives the information on a failure and passes the high-frequency signal. The outdoor amplifying apparatus includes: a tone signal generating unit that receives the information on a failure from the first and second amplifying units and generates a tone signal based on the information; and a superposing circuit that supplies a coaxial line with a high-frequency signal parallely-synthesized at the first and second amplifying units and supplies the coaxial line with the tone signal. A third amplifying unit is controlled by a gain control signal to be gain-variable. The indoor amplifying apparatus includes: a separating circuit that separates the tone signal from the high-frequency signal coming from the coaxial line; and a gain control unit that identifies the tone signal and generates the gain control signal based on the tone signal (see, for example, Japanese Laid-Open Patent Application Publication No. H7-74679).

An optical microcell transmitting system that includes an optical interface unit connected to a radio base station, and a simplified optical base station connected to the optical interface unit through an optical fiber and to an antenna, and that detects a failure of the simplified optical base station has been proposed. The optical microcell transmitting system includes: a first pilot signal superposing unit that is provided in the optical interface unit and superposes a first pilot signal on a downlink signal coming from the radio base station; a first control unit that is provided in the simplified optical base station and controls an output of the simplified optical base station when detecting level variation of the first pilot signal; a second pilot signal superposing unit that superposes a second pilot signal on a signal received at an antenna; and a second control unit that is provided in the optical interface and controls output for the base station when detecting level variation of the second pilot signal (see, for example, Japanese Laid-Open Patent Application Publication No. H8-149552).

However, the monitoring apparatuses disclosed in Patent Document 1 or 2 have problems. Since the pilot oscillator is installed in the outdoor apparatus, namely is put under severe conditions, the oscillator is not reliable. Further, even while the amplifier in the outdoor apparatus is operating well, the monitoring apparatus judges that a failure has occurred at the amplifier when the detection level for the pilot signal fluctuates due to a failure at the pilot oscillator. As a result, when the detection level for the pilot signal fluctuates, it must be confirmed whether a failure occurred at the pilot oscillator or at the amplifier. Such work of confirmation and replacement must be done outdoors and thus the maintainability decreases.

The detecting apparatuses or the monitoring apparatuses as disclosed in Patent Documents 1 to 3 also have problems. Since these apparatuses take the level variation of the pilot signal as the gain variation of a band of a received signal and detect a failure, the frequency for the pilot signal is set near the frequency band of a received signal. As a consequence, it is difficult to separate the pilot signal from the received signal. In addition, even though efforts are made to prevent leakage of the pilot signal to an antenna or a radio base station, it is difficult to curb the leakage since the proximity of frequency to the band reduces the attenuation by a filter.

Other monitoring apparatuses or detecting apparatuses have further problems. Generally, an indoor apparatus provides driving power for an outdoor apparatus, a DC bias being superposed on a coaxial cable that is used for transmitting a main signal such as a received signal between the indoor apparatus and the outdoor apparatus. A receiving part of the indoor apparatus or the outdoor apparatus where the coaxial cable is connected is grounded through an arrestor. When the arrestor is positioned in a shunt connection with the main signal, the arrestor has high impedance to both the receiving frequency band and the DC bias. As a result, these apparatuses cannot detect a failure of the arrestor in an open mode.

Furthermore, when the detecting level for the pilot signal fluctuates, these monitoring apparatuses or detecting apparatuses cannot determine whether the cause is the disconnection or breakage of the coaxial cable or the failure of the amplifier or the pilot oscillator of the outdoor apparatus. Therefore, the coaxial cable, the connecting part of the coaxial cable, the amplifier, and the pilot oscillator must be checked one by one whereby the maintainability decreases.

### SUMMARY

According to an aspect of the invention, a receiving system includes a first apparatus and a second apparatus, the first apparatus and the second apparatus being connected through a transmission line. The first apparatus includes an amplifier that amplifies a received signal, the signal amplified being transmitted to the second apparatus; a converting unit that reflects a pilot signal transmitted from the second apparatus through the transmission line and changes characteristics; and a control unit that controls the converting unit based on information obtained by monitoring the amplifier. The second apparatus includes a pilot output unit that outputs the pilot signal; a monitoring unit that monitors the first apparatus based on a level of a synthesized signal synthesized from the pilot signal output from the pilot output unit and a reflected signal that is from the first apparatus and includes the pilot signal reflected at the converting unit.

According to a receiving system of the embodiments, it becomes possible to monitor the operation of an apparatus including an amplifier for a received signal with a monitoring unit provided in another apparatus.

The advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

Fig. 1 is a block diagram depicting a receiving system according to a first embodiment;
Fig. 2 and Fig. 3 are explanatory diagrams depicting a relationship between frequencies of both pilot signal and received signal and return losses;
Fig. 4 is a waveform diagram depicting one example of a waveform of a synthesized signal;
Fig. 5 is a diagram depicting one example of an effective value of power of a synthesized signal;
Fig. 6 is a circuit diagram depicting a structure of a control unit and a converting unit according to the first embodiment;
Fig. 7 is a diagram depicting characteristics of an amplitude/phase variable circuit;
Fig. 8 is a diagram depicting a relationship between monitoring information on a low-noise amplifier and an amount of change of the phase;
Fig. 9 is a circuit diagram depicting a structure for monitoring bias current of the amplifying transistor;
Fig. 10 is a circuit diagram depicting one example of a subtracter;
Fig. 11 is a circuit diagram depicting one example of a phase shifter;
Fig. 12 is a diagram depicting one example of a 90 degree hybrid coupler;
Fig. 13 is a diagram depicting one example of a 3dB directional coupler of a planar structure;
Fig. 14 is a diagram depicting one example of a 3dB directional coupler of a three-dimensional structure;
Fig. 15 is a diagram depicting characteristics of a reflection-type phase shifter;
Fig. 16 is a block diagram depicting another structure of the converting unit;
Fig. 17 is a circuit diagram depicting a structure of a converting unit using a PIN diode for a switch;
Fig. 18 is a comparison table depicting a relationship between terminal impedance and outputs of a control unit;
Fig. 19 is a circuit diagram depicting an example of a circulator including circulators;
Fig. 20 is a block diagram depicting another structure of a converting unit;
Fig. 21 is a block diagram depicting a structure of a receiving system according to a second embodiment;
Fig. 22 is a circuit diagram depicting a structure of a converting unit including transistors as a frequency multiplier;
Fig. 23 is a circuit diagram depicting another structure of a converting unit including a transistor as a multiplier;
Fig. 24 is a block diagram depicting a structure of a frequency detecting mechanism having a counter;
Fig. 25 is a block diagram depicting a structure of a receiving system according to a third embodiment;
Fig. 26 is a block diagram depicting an example of a delay unit;
Fig. 27 is a circuit diagram depicting a structure of a delay unit with delay filters;
Fig. 28 is a table depicting a relationship between a response time and outputs of a control unit; and
Fig. 29 is a block diagram depicting a structure of an indoor monitoring control apparatus where a pilot oscillator is shared.

### DESCRIPTION OF EMBODIMENTS

Preferred embodiments of the present invention will be explained with reference to the accompanying drawings. In the explanation below, it is assumed that a first apparatus is a receiving amplifier installed outdoors and a second apparatus is a low-noise amplifier monitoring card placed indoors. Identical components are given identical reference numerals and duplicate explanations will be omitted.

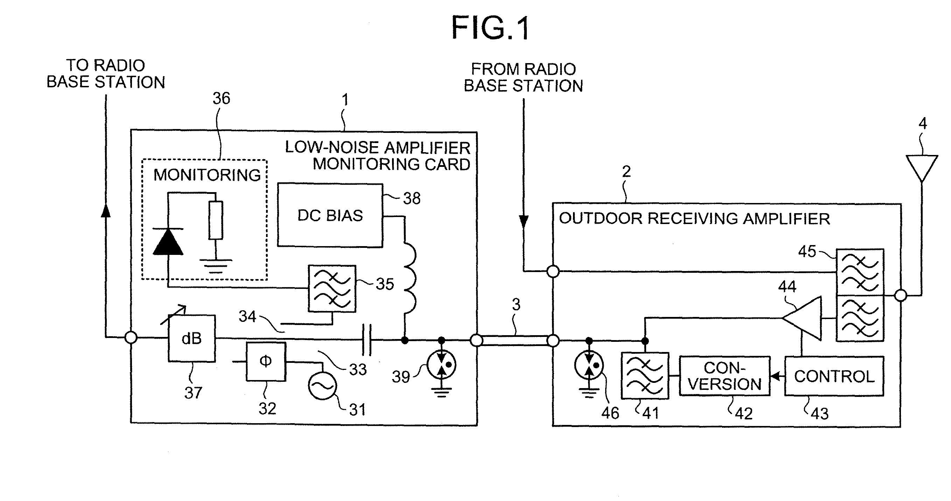

Fig. 1 is a block diagram depicting a receiving system according to a first embodiment. As depicted in Fig. 1, the receiving system includes a low-noise amplifier monitoring card 1 provided in an indoor apparatus, and an outdoor receiving amplifier 2. The low-noise amplifier monitoring card 1 includes a pilot oscillator (pilot output unit) 31, a first phase shifter 32, a first directional coupler 33, a second directional coupler 34, a first bandpass filter 35, and a pilot detecting unit (monitoring unit) 36. The outdoor receiving amplifier 2 includes a second bandpass filter 41, a converting unit 42, and a control unit 43. The low-noise amplifier monitoring card 1 and the outdoor receiving amplifier 2 are connected through a coaxial cable 3 functioning as a transmission path.

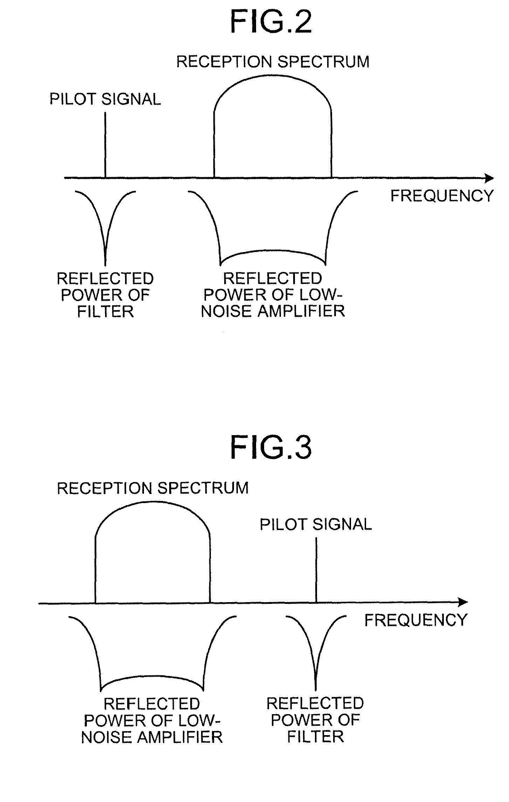

A pilot signal output from the pilot oscillator 31 is sent to the outdoor receiving amplifier 2 through the first directional coupler 33 and the coaxial cable 3. In the outdoor receiving amplifier 2, the pilot signal is split at the second bandpass filter 41 and is reflected at the converting unit 42. Since the frequency of the pilot signal falls within a high-return-loss frequency band of the low-noise amplifier (amplifier) 44 (see Fig. 2 or Fig. 3), the pilot signal is also reflected at the low-noise amplifier 44. The control unit 43 monitors the operation of the low-noise amplifier 44 and changes characteristics such as a phase or amplitude of a signal reflected at the converting unit 42 (hereinafter, "first reflected signal") based on information on the operation.

A synthesized signal including the first reflected signal and a signal reflected at the low-noise amplifier 44 (hereinafter, "second reflected signal") comes back to the low-noise amplifier monitoring card 1 through the coaxial cable 3 from the outdoor receiving amplifier 2 as a reflected signal. A synthesized signal including the reflected signal from the outdoor receiving amplifier 2 and a pilot signal output from the pilot oscillator 31 is extracted at the second directional coupler 34 and the first bandpass filter 35, and is detected at the pilot detecting unit 36. The pilot detecting unit 36 includes, for example, a diode and a resistor and conducts squared detection using a diode characteristic curve. The receiving system monitors the low-noise amplifier 44 based on information obtained by detecting the synthesized signal.

The first phase shifter 32 adjusts initial phase differences between pilot signals. For instance, when one indoor apparatus manages multiple outdoor receiving amplifiers 2, the indoor apparatus includes multiple low-noise amplifier monitoring cards 1. In this case, initial phases of pilot signals may vary depending lengths of coaxial cables 3 between the low-noise amplifier monitoring cards and the outdoor receiving amplifiers 2. The first phase shifter 32 eliminates the initial phase differences.

The low-noise amplifier monitoring card 1 also includes a DC bias unit 38, a compensating unit 37 and an arrestor 39. The arrestor 39 is positioned in a shunt connection with a connecting part of the coaxial cable 3. The arrestor 39 has high impedance to a received signal but does not have high impedance to a pilot signal. The DC bias unit 38 provides the outdoor receiving amplifier 2 with driving power through the coaxial cable 3.

The compensating unit 37 corrects a loss of a received signal coming from the outdoor receiving amplifier 2 through the coaxial cable 3. For instance, when the indoor apparatus includes multiple low-noise amplifier monitoring cards 1, a loss of a receiving signal at the low-noise amplifier monitoring card 1 may vary depending on the lengths of the coaxial cables 3 between the low-noise amplifier monitoring cards 1 and the outdoor receiving amplifier 2. The compensating unit 37 corrects the loss and transmits a signal with a fixed level to a radio base station (not depicted).

The outdoor receiving amplifier 2 also includes a branching unit 45 and an arrestor 46. The arrestor 46 is positioned in a shunt connection with a connecting part of the coaxial cable 3. The arrestor 46 has high impedance to a received signal but does not have high impedance to a pilot signal. The branching unit 45 is connected to the antenna 4 and divides a transmitting signal from a received signal. The branching unit 45 is provided when the antenna 4 is used for both reception and transmission.

Fig. 2 and Fig. 3 is are explanatory diagrams depicting a relationship between frequencies of both pilot signal and received signal and return losses of both second bandpass filter and low-noise amplifier. Fig. 2 depicts a case where a frequency of a pilot signal is lower than a frequency band of a received signal. Fig. 3 depicts a case where a frequency of a pilot signal is higher than a frequency band of a received signal. As can be seen from Figs. 2 and 3, the return loss of the second bandpass filter 41 is small within the frequency band of a received signal and is large at the frequency of a pilot signal. The return loss of the low-noise amplifier 44 is large within the frequency band of a received signal and is small at the frequency of the pilot signal. Therefore, a received signal and a pilot signal can be easily separated. In addition, a pilot signal can be curbed enough within the frequency band of a received signal.

One characteristic of a reflected signal that is changed when the signal is reflected at the converting unit 42 is, for example, phase. Here a case where phase is changed at the converting unit 42 is explained.

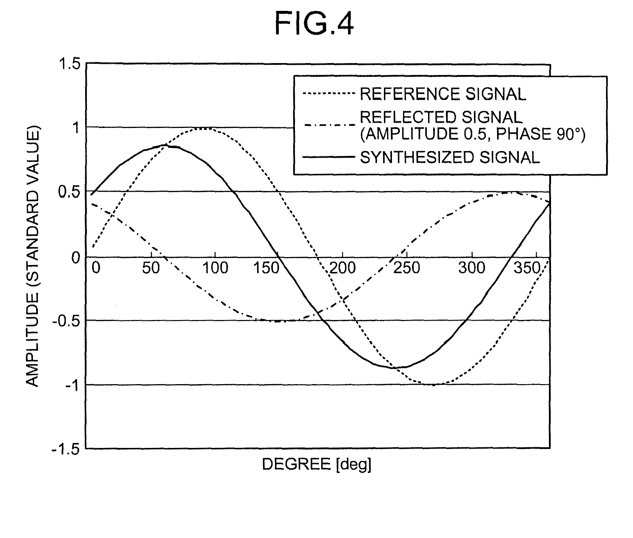

Fig. 4 is a waveform diagram depicting one example of a waveform of a synthesized signal when the phase of a reflected signal is changed. Here the pilot signal is assumed to have a sinusoidal waveform. Further, at the pilot detecting unit 36, the amplitude of the reflected signal becomes half of the amplitude of the pilot signal (reference signal) output from the pilot oscillator 31and the phase difference becomes 90 degrees. For simplification, multiple reflections are disregard. Fig. 4 depicts a case where a loss from the pilot oscillator 31 to the converting unit 42 is 3.0dB.

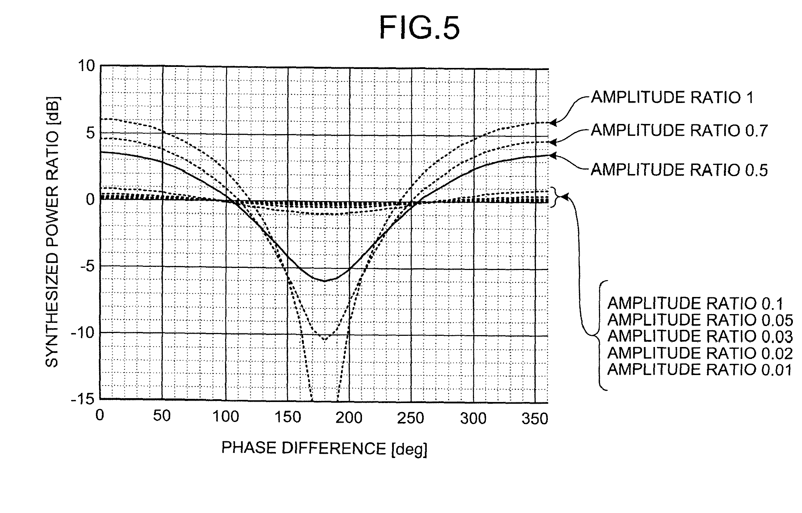

Fig. 5 is a diagram depicting one example of an effective value of power of a synthesized signal when the phase and the amplitude of the reflected signal are changed. As can be seen from Fig. 5, when the amplitude of the reflected signal is half of the amplitude of the reference signal (amplitude ratio is 0.5) at the pilot detecting unit 36, the effective value of power of a synthesized signal rises 3.5dB at the in-phase and falls 6dB at the reverse phase, compared to the effective value of power of the reference signal. Therefore, if the phase of the reflected signal when the low-noise amplifier 44 does not operate well and the phase of the reflected signal when the low-noise amplifier 44 operates well are set to differ by half a wavelength, the range of the effective value spans 9.5dB. The pilot detecting unit 36 detects the synthesized signal whereby a failure of the outdoor receiving amplifier 2 can be known from the detected level of the signal.

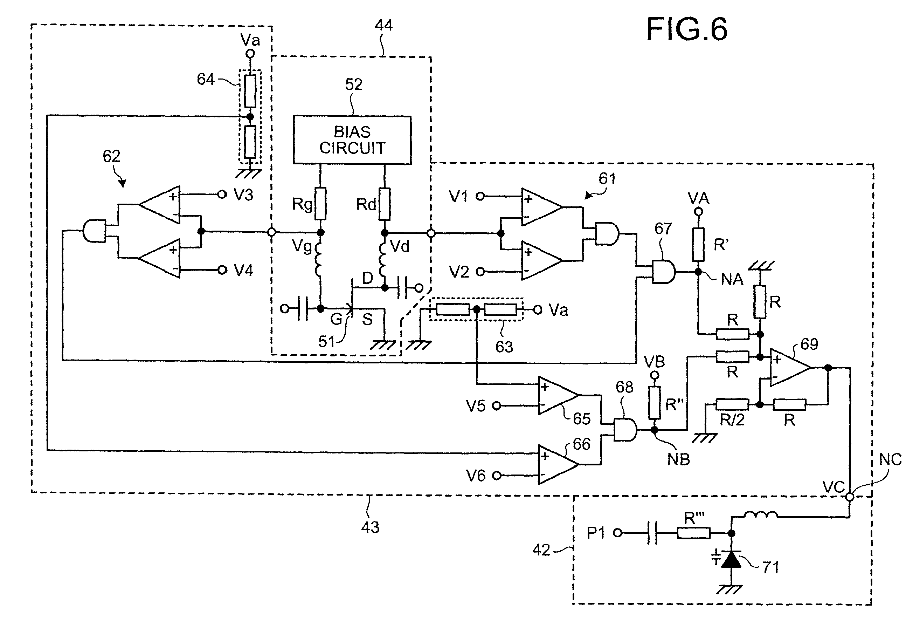

Fig. 6 is a circuit diagram depicting a structure of the control unit and the converting unit of the receiving system according to the first embodiment. The structure of the low-noise amplifier 44 is explained. As depicted in Fig. 6, the low-noise amplifier 44 includes an amplifying transistor 51 whose source terminal (S) is grounded. The amplifying transistor 51 is, for example, a field effect transistor (FET).

Gate voltage is applied to a gate terminal (G) of the amplifying transistor 51 from a bias circuit 52 through a gate resistor Rg and a decoupling inductor. Drain voltage is applied to a drain terminal (D) from the bias circuit 52 through a drain resistor Rd and a decoupling inductor. The bias circuit 52 is included in the low-noise amplifier 44. DC cut capacitors are connected to the gate terminal (G) and the drain terminal (D) of the amplifying transistor 51.

The control unit 43 monitors bias voltage and temperature of the amplifying transistor 51. The control unit 43 includes a first window comparator 61, a second window comparator 62, a first thermosensor 63, a second thermosensor 64, a first comparator 65, a second comparator 66, a first AND circuit 67, a second AND circuit 68, an operational amplifier 69, and multiple resistors R. Resistance values for those simply denoted as resistor(s) R in this specification are properly selected in consideration of the characteristics of a circuit.

The first window comparator 61 provides a high level output at a drain side of the amplifying transistor 51 when the voltage Vd of a connecting node for the drain resistor Rd and the decoupling inductor is within a normal voltage range (V1 to V2), and otherwise provides a low level output. The second window comparator 62 provides a high level output at the gate side of the amplifying transistor 51 when the voltage Vg of a connecting node for the gate resistor Rg and the decoupling inductor is within a normal voltage range (V3 to V4), and otherwise provides a low level output.

The first AND circuit 67 provides a high level output when both the first and second window comparators provide a high level output, and otherwise provides a low level output. When the bias voltage of the amplifying transistor 51 is normal, namely when the amplifying transistor operates well, the voltage Vd and the voltage Vg are within a normal voltage range. When the bias voltage of the amplifying transistor is not normal, namely when the amplifying transistor does not operate well, at least one of the voltage Vd and the voltage Vg does not stay within the normal voltage range.

That is, when the first AND circuit 67 provides a high level output, the amplifying transistor 51 is operating normally. To the contrary, when the first AND circuit 67 provides a low level output, the amplifying transistor 51 is not in a normal condition. Since the output terminal of the first AND circuit 67 is connected through a resistor R to a point to which voltage VA is applied, the voltage of an output node NA of the first AND circuit 67 becomes VA when the amplifying transistor 51 is operating normally. When the amplifying transistor 51 is operating normally, the voltage of the output node NA of the first AND circuit 67 becomes zero.

The first thermosensor 63 and the second thermosensor 64 include, for example, thermal diodes, thermistors, or posistors, and outputs voltage corresponding to temperature. The first thermosensor 63 is placed near the amplifying transistor 51. The first comparator 65 provides a high level output when the output voltage of the first thermosensor 63 is within a normal voltage range (larger than V5), and otherwise provides a low level output. The second thermosensor 64 is placed for example near a fin of a casing, apart from the amplifying transistor 51. The second comparator 66 provides a high level output when the output voltage of the second thermosensor 64 is within a normal voltage range (larger than V6), and otherwise outputs a low level output.

The second AND circuit 68 provides a high level output when both the first comparator 65 and the second comparator 66 provide high level outputs, and otherwise provides a low level output. Temperature of the amplifying transistor 51 while operating is determined by power consumption and thermal resistance at the amplifying transistor 51 and surrounding temperature. When the amplifying transistor 51 is not operating normally, the bias voltage becomes abnormal whereby the power consumption and the temperature also become abnormal. As a result, a problem at the amplifying transistor 51 can be detected indirectly from the temperature of the amplifying transistor 51.

When the amplifying transistor 51 is operating normally, both output voltage of the first thermosensor 63 and output voltage of the second thermosensor 64 are within a normal voltage range. When the amplifying transistor 51 is not operating normally, the output voltage of the first thermosensor 63 and/or the output voltage of the second thermosensor 64 departs from the normal voltage range.

When the second AND circuit 68 provides a high level output, the amplifying transistor 51 is operating normally. When the second AND circuit 68 provides a low level output, the amplifying transistor 51 is not normally operating. Since an output terminal of the second AND circuit 68 connected through a resistor R to a point to which voltage VB (here it is assumed that VB<VA) is applied, voltage of an output node NB of the second AND circuit 78 becomes VB when the amplifying transistor 51 is operating normally. When the amplifying transistor 51 is operating abnormally, the voltage of the output node NB of the second AND circuit 68 becomes zero.

The operational amplifier 69 is, along with five resistors R connected to an inverting terminal and a non-inverting terminal, part of an adder that adds the voltage of the output node NA of the first AND circuit 67 and the voltage of the output node NB of the second AND circuit 68. Therefore, an output of the operational amplifier 69, namely voltage VC of an output node NC of the adder, when both the bias voltage and the temperature of the amplifying transistor 51 are normal becomes VA+VB. When the bias voltage of the amplifying transistor 51 is normal but the temperature is not normal, the voltage VC of the output node NC of the adder becomes VA. When the temperature of the amplifying transistor 51 is normal but the bias voltage is not normal, the voltage VC of the output node NC of the adder becomes VB. When both the bias voltage and the temperature of the amplifying transistor 51 are not normal, the voltage VC of the output node NC of the adder becomes zero. The voltage VC of the output node NC is information that is obtained while the low-noise amplifier is monitored.

The converting unit 42 shifts the phase of the first reflected signal based on voltage VC of an output node NC of the control unit 43. The converting unit 42 may take various forms but in Fig. 6, a variable reactance circuit including a resistor R and a varactor diode 71 are used as the converting unit 42. A cathode terminal of the varactor diode 71 is connected to a port P1 through the resistor R and a bias-cut capacitor. The voltage VC of the output node NC of the control unit 43 is applied to the cathode terminal of the varactor diode 71 through a decoupling inductor. An anode terminal of the varactor diode 71 is grounded.

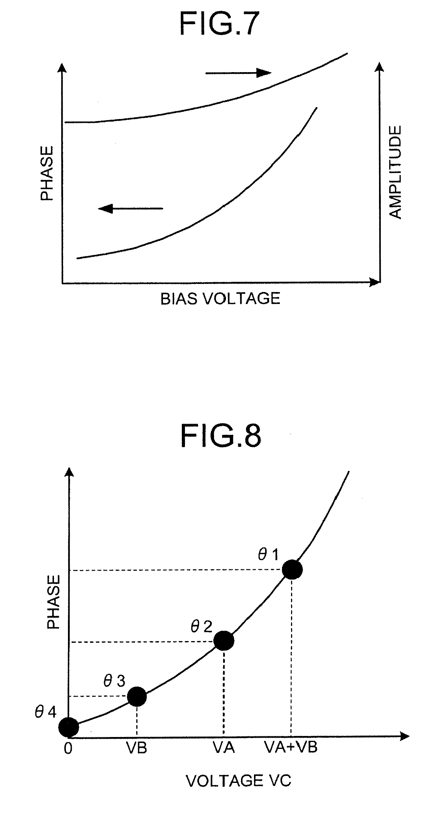

The port P1 is connected to the second bandpass filter 41. The amplitude and the phase of the pilot signal of the port P1 are changed by the reactance corresponding to the bias voltage applied to the resistor R and the varactor diode 71 and are reflected. Fig. 7 is a diagram depicting amplitude and phase characteristics of a reflected signal. The resistor R may be replaced by a PIN diode to keep the reactance constant. Both the varactor diode and the PIN diode may be used to widen a range of the change.

Fig. 8 is a diagram depicting the information obtained by monitoring the low-noise amplifier, namely a relationship between the voltage VC of the output node NC and an amount of change of the phase. As depicted in Fig. 8, when the voltage VC equals to VA+VB, namely when the amplifying transistor 51 is normal (both the bias voltage and the temperature are normal), the phase of the first reflected signal shifts by θ1. When the voltage VC equals to VA, namely when the bias voltage of the amplifying transistor 51 is normal but the temperature is not normal, the phase of the first reflected signal shifts by θ2 (<θ1). When the voltage VC equals to VB, namely when the temperature of the amplifying transistor 51 is normal but the bias voltage is not normal, the phase of the first reflected signal shifts by θ3 (<θ2). When the voltage VC equals zero, namely when both the bias voltage and the temperature of the amplifying transistor 51 are not normal, the phase of the first reflected signal shifts by θ4 (<θ3).

As explained above, according to an amount of shift of the phase of the first reflected signal, not only a state of the amplifying transistor 51 but also a failure other than that of the amplifying transistor 51 can be detected. For example, when the phase of the first reflected signal shifted by θ3, it is detected that temperature around a device departed from an operable range because thermal resistance has increased due to a floated substrate caused by a loose screw, a radiation fin has dropped, or a fan has broken down. Therefore, more advanced monitoring becomes possible.

The analog control has been explained above but even with the digital control, the same advantages are obtained. Though the voltage VC that controls the phase shifter has been obtained from VA and VB corresponding to the normal state and the abnormal state, the voltage VC may be stored beforehand as independent data in a ROM and depending on a high level or a low level corresponding to the normal state or the abnormal state, an address of data to be read out may be changed whereby associated control voltage is output. When a phase shifter is digitally controllable, the phase shifter can be controlled digitally.

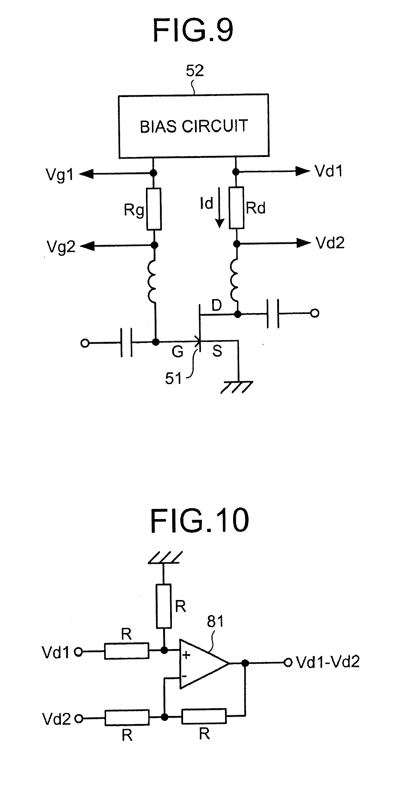

Fig. 9 is a circuit diagram depicting a structure for monitoring bias current of the amplifying transistor. The control unit 43 may monitor the bias current of the amplifying transistor 51 as depicted in Fig. 9 instead of monitoring the bias voltage of the amplifying transistor 51 as depicted in Fig. 6. In this case, voltage Vd1 and Vd2 at both ends of a drain resistor Rd are measured, and a difference Vd1-Vd2 is divided by a resistance value of the drain resistor Rd whereby current Id running through the drain resistor Rd is obtained. Current running through a gate resistor Rg of the amplifying transistor 51 is also obtained by measuring voltage Vg1 and Vg2 at both ends of the gate terminal Rg and by dividing the voltage difference by a resistance value of the gate resistor Rg.

In this case, each voltage Vd1 and Vd2 at both ends of the drain resistor Rd may be input into a window comparator like the first window comparator 61 to detect whether each voltage Vd1 and Vd2 is within a normal voltage range. Or a subtracter may be used to obtain a voltage difference Vd1-Vd2 and input the output voltage of the subtracter into a window comparator whereby it is detected whether a voltage difference between Vd1 and Vd2 is within a normal voltage range. The same is true with respect to voltages Vg1 and Vg2 at both ends of the gate resistor Rg.

Fig. 10 is a circuit diagram depicting one example of a subtracter. The subtracter includes, for example, an operational amplifier 81 and resistors R, each of an inverting input terminal and a non-inverting input terminal of the operational amplifier 81 is connected to two resistors R. The operational amplifier 81 outputs a voltage difference obtained by subtracting input voltage at the inverting input terminal (for example, Vd2) from input voltage at the non-inverting input terminal (for example, Vd1). The voltage difference between Vd1 and Vd2 can be amplified or attenuated when a ratio of resistance values of the four resistors is changed.

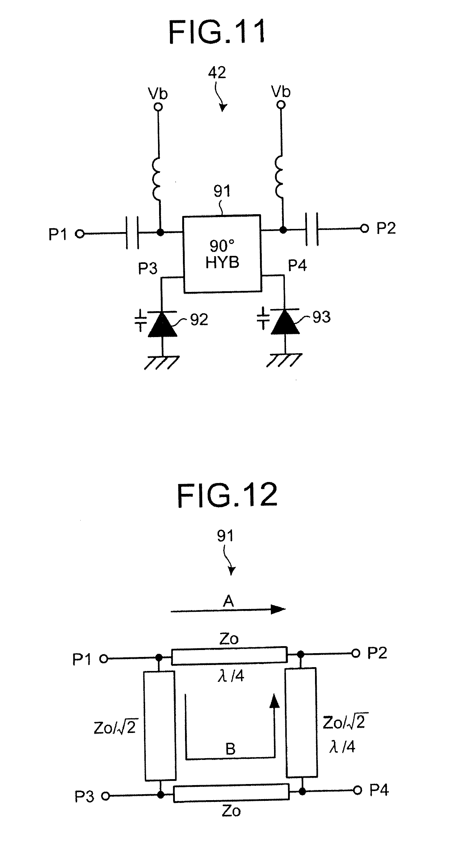

Fig. 11 is a circuit diagram depicting one example of a phase shifter. As depicted in Fig. 11, instead of the variable reactance circuit including a resistor and the varactor diode 71 depicted in Fig. 6, the converting unit 42 may include a reflection-type phase shifter including a 90 degree hybrid coupler (HYB) 91 and varactor diodes 92 and 93. The voltage VC of the output node NC of the control unit 43 is applied as bias voltage Vb through a decoupling inductor to ports P1 and P2 of the 90 degree hybrid coupler 91. A DC cutting capacitor is connected to each of ports P1 and P2. Varactor diodes 92 and 93 with similar characteristics are connected to ports P3 and P4 respectively.

A signal coming into the port P1 is completely reflected at the ports P3 and P4, and is output from the port P2, an isolation port. A signal having amplitude identical to that of the input signal at the port P1 and a phase corresponding to a capacitance value at a reflection point appears at the port P2 when a loss of the circuit is neglected. In other words, by controlling the bias voltage Vb applied to varactor diodes 92 and 93, the phase of the signal output from the port P2 can be controlled. Namely, when the port P1 is connected to the second bandpass filter 41 and the port P2 is open, short-circuited, or connected to arbitrary impedance, a phase-changed signal reflected at P2 is obtained for a pilot signal input from the port P1.

Fig. 12 is a diagram depicting one example of a 90 degree hybrid coupler. When impedance of the ports P1 to P4 is Z₀, characteristic impedance is Z₀ or Z₀/√2. Thus, a branch line which includes distributed constant lines with the electric length λ/4 (=90 degrees) connected in a rectangular form can be used as a 90 degree hybrid coupler 91. When the loss of the circuit is neglected, a signal having amplitude identical to that of the input signal at the port P1 and having a phase corresponding to a capacity value of varactor diodes connected to the ports P3 and P4 appear at the port P2. When the branch line is used, one DC bias line is sufficient. The form of the branch line is not restricted to a rectangular and may be a circle.

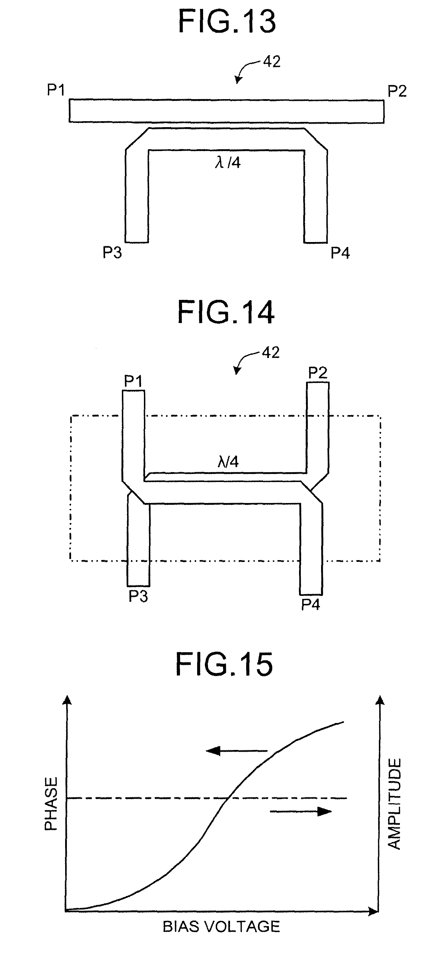

Fig. 13 is a diagram depicting an example of a 3dB directional coupler. As depicted in Fig. 13, the converting unit 42 may include the 3dB directional coupler instead of the branch line. The 3dB directional coupler is a side-coupler where a pair of lines is formed on one plane. The first reflected signal with a phase changed is output from the port P3, an isolation port, for a pilot signal input from the port P1.

Fig. 14 is a diagram depicting another example of a 3dB directional coupler. As depicted in Fig. 14, the converting unit 42 may include a 3dB directional coupler with a three-dimensional structure instead of a 3dB directional coupler with a planar structure. In the 3dB directional coupler, a line between the ports P1 and P4 is placed above a line between the ports P2 and P3 with a dielectric layer (indicated by a two-dot chain line) between the two lines. The first reflected signal with a phase changed is output from the port P2, an isolation port, for a pilot signal input from the port p1.

The phase shifter is not restricted to the above examples. For example, a circuit that creates a 180-degree phase difference such as a rat race circuit, or a circuit that creates a phase difference of an integral multiple of 90 degrees may be used. A slotline that can change a physical length may be used as a phase shifter. The 90 degree hybrid coupler may include a transformer.

Fig. 15 is a diagram depicting characteristics of the reflection-type phase shifter. As depicted in Fig. 15, with the phase shifters explained above, variation of a phase at an amplitude constant with respect to the bias voltage Vb applied to the varactor diodes can be obtained.

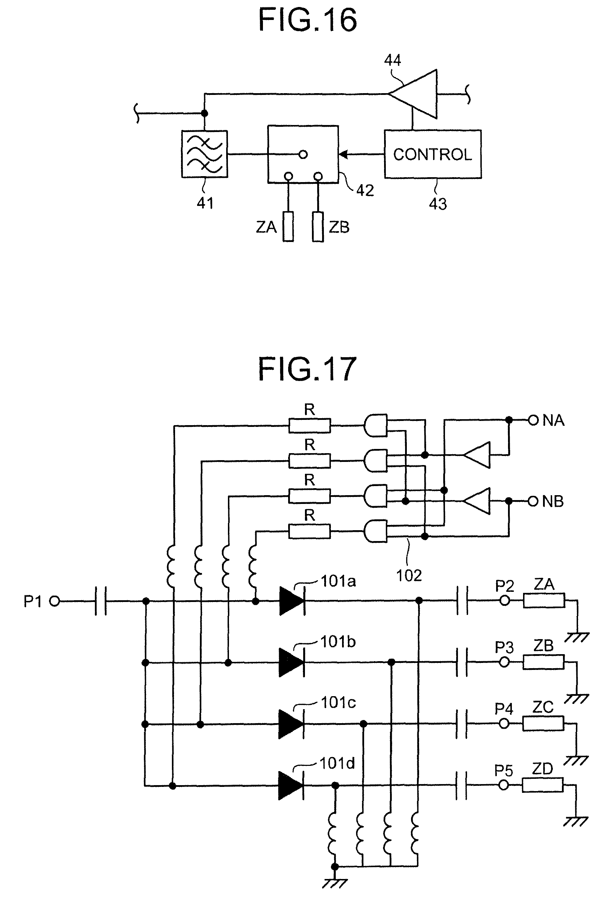

Fig. 16 is a block diagram depicting another structure of the converting unit. In the above examples, the phase of the first reflected signal is shifted by, for example, a shifter. The converting unit 42, as depicted in Fig. 16, may control the phase of the first reflected signal by switching termination conditions of a line between the second bandpass filter 41 and the converting unit 42.

For instance, the converting unit 42 includes a switch that switches so that terminal impedance becomes ZA when the low-noise amplifier 44 operates normally, and switches so that terminal impedance becomes ZB (≠ZA) when the low-noise amplifier 44 does not operate normally. A relay or a diode may be used for such a switch. The control unit 43 controls the switch. Terminals of the switch may be increased so that terminal impedance can take values ZA to Zn.

Fig. 17 is a circuit diagram depicting a structure of a converting unit using a PIN diode for a switch. As depicted in Fig. 17, each anode terminal of PIN diodes 101a to 101d is connected to a logic unit 102 through a decoupling inductor and a resistor R. Bias cutting capacitors are inserted between each anode terminal of the PIN diodes 101a to 101d and the port P1, and each cathode terminal and each of the ports P2 to P5. Each cathode terminal of the PIN diodes 101a to 101d is also grounded through a decoupling inductor. Voltage VA and VB of the output nodes NA and NB of the control unit 43 are applied to the logic unit 102.

The input port P1 is connected to the second bandpass filter 41, and the output ports P2 to P5 are connected to terminal impedance ZA to ZD. The resistors R are selected so that each PIN diode is turned on by an output from the logic unit 102. Voltage applied to the logic unit 102 is outputs of the output nodes NA and NB, which equal to VA and VB in Fig. 6, but when switches are used to switch terminal impedance, an adding circuit of Fig. 6 is not needed and the outputs of the AND circuits 67 and 68 are directly applied. VA may equal to VB. Here it is assumed that VA equals to VB, and VA and VB are a high level output and a low level output identical to the outputs of the AND circuits 67 and 68.

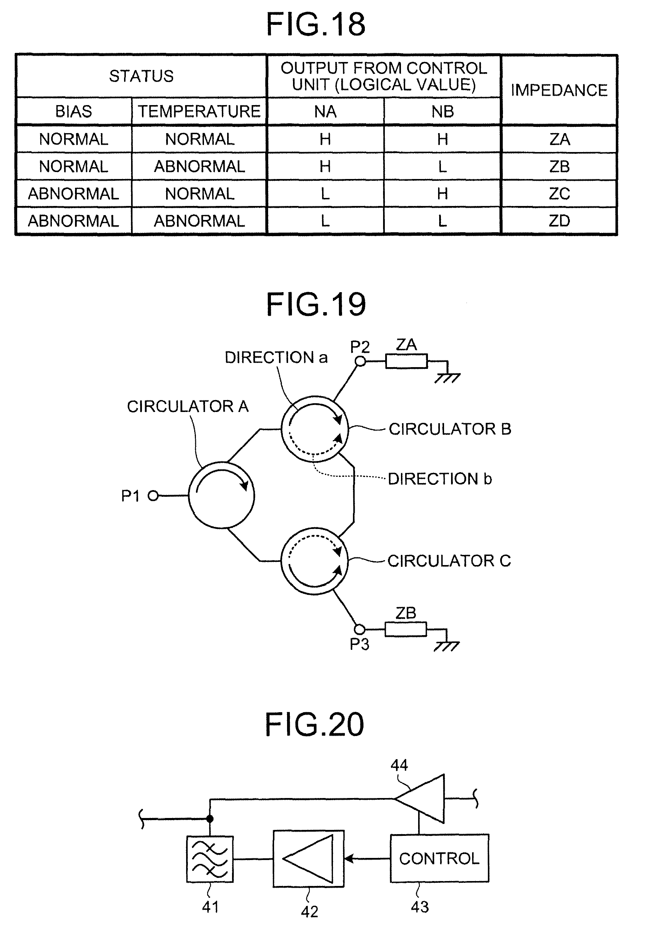

Fig. 18 is a table depicting a relationship between the terminal impedance and the outputs of the output node NA and NB of the control unit 43. As depicted in Fig. 18, when the output node NA provides a high level output and the output NB also provides a high level output, namely when the bias voltage and the temperature of the amplifying transistor 51 are normal, the terminal impedance is ZA. When the output node NA provides a high level output and the output node NB provides a low level output, namely when the bias voltage of the amplifying transistor 51 is normal but the temperature is not normal, the terminal impedance is ZB. When the temperature of the amplifying transistor 51 is normal but the bias voltage is not normal, the terminal impedance is ZC. When both the bias voltage and the temperature of the amplifying transistor 51 are not normal, the terminal impedance is ZD.

As explained above, the terminal impedance takes various values ZA to ZD depending on the monitoring information such as bias voltage or temperature. The amplitude and phase of reflected signals change depending on the impedance. In Fig. 17, four impedance values ZA to ZD are switched by switches but using two impedance values Z1 and Z2, switching can be controlled based on four states: namely (Z1: on, Z2: off), (Z1: off, Z2: on), (Z1: on, Z2: on), and (Z1: off, Z2: off). In this case, corresponding to ZA to ZD, four impedance states, namely Z1, Z2, (Z1×Z2)/(Z1+Z2), and OPEN, are used. Alternatively, ZA to ZD are connected in series and each connected point is grounded through a switch, whereby the same result can be obtained.

A circulator may be used to form a switch of the converting unit 42 of Fig. 16. In this case, magnetic poles of the circulator are excited by an electric magnet. When the direction of current is changed, the rotation direction of the circulator is changed. A magnetic pole itself may be an electric magnet. Fig. 19 is a diagram depicting an example where three circulators are used. In Fig. 19, the rotation direction of circulators B and C can be changed to direction "a" or direction "b" but the rotation direction of a circulator A is fixed. When the rotation direction of the circulators B and C is direction "a" (solid arrows), a signal from the port P1 is transmitted to the port P2 but not to the port P3, and is reflected at the impedance ZA to return to the port P1. When the rotation direction of the circulators B and C is direction "b" (dashed arrows), a signal from the port P1 is transmitted to the port P3 but not to the port P2, and is reflected at the impedance ZB to return to the port P1. In this way, a terminal impedance condition can be controlled by the rotation direction of the circulators.

The filter 41 may be used for the converting unit 42. A filter has a certain resonance frequency when connected to given input/output impedance. In other words, when an impedance variable device such as a varactor diode or a PIN diode is connected to the filter and the input/output impedance of the filter is changed by the device, the resonance frequency of the filter is changed. When the resonance frequency of the filter deviates from the frequency of a pilot signal, the pilot signal is reflected.

The phase of the reflected signal depends on a difference between the resonance frequency of the filter and the frequency of the pilot signal. Therefore, the filter can be used for a switch and a reflection-type phase shifter. Instead of connecting an impedance variable device to a filter, when a filter includes an inductor and a capacitor, the capacitor may be replaced by an impedance variable device such as a varactor diode to change the characteristics of the filter.

Fig. 20 is a block diagram depicting another structure of a converting unit. Instead of changing the phase of the first reflected signal, the converting unit 42 controls the amplitude of the first reflected signal based on the monitoring information on the low-noise amplifier 44 provided by the control unit 43. The converting unit 42 may be an amplifier that amplifies the amplitude of the first reflected signal, or an attenuator that attenuates the amplitude of the first reflected signal.

As an attenuator, a transistor or a PIN diode can be used. As an amplifier, a transistor with a reflection gain can be used. A typical amplifier other than a reflection-type amplifier may be used. With a circulator and an amplifier, a signal from the port P1 may be amplified and input to the port P3 through the port P2, and eventually be output from the port P1.

According to the first embodiment, the pilot oscillator is disposed in an indoor apparatus which is not subject to severe conditions and thus the reliability of the pilot oscillator 31 is high. Further, since a failure of the pilot oscillator can be recognized in indoor operation, it is easily confirmed whether the failure occurred at the pilot oscillator 31 or the low-noise amplifier 44. When a cause of the failure is attributable to the pilot oscillator 31, repair or replacement of the pilot oscillator 31 can be performed inside a building. Only after it is confirmed that the pilot oscillator 31 is operating well, repair or replacement of the low-noise amplifier 44 is conducted outside a building. As a result, the maintainability of the outdoor receiving amplifier 2 and the receiving system improves. In addition, since an indoor apparatus is not subject to severe conditions, costs become low.

The frequency of the pilot signal need not be set near the receiving frequency band and thus the frequency of the pilot signal can be freely set. Conventionally, since the level variation of the pilot signal input into the low-noise amplifier 44 has been taken as the level variation of the received signal, the frequency of the pilot signal has been set near the receiving frequency band. In this case, when various receiving frequency bands are used, various frequencies are used for pilot signals corresponding to the receiving frequency bands, pilot oscillators and pilot detecting units must be prepared for each frequency. On the other hand, according to the first embodiment, even when various receiving frequency bands are used, one frequency for pilot signals is sufficient whereby the pilot oscillators and the pilot detecting units can be configured in common. In addition, the frequency of a pilot signal needs not be set near a receiving frequency band, and thus by detuning, a pilot signal can be easily separated.

When the coaxial cable 3 is dislocated from the connecting part of the outdoor receiving amplifier 2 or the coaxial cable 3 is damaged, a pilot signal is reflected at a point of failure. As a result, the signal reflected at the point of failure is added to the synthesized signal, whereby such a failure is distinguishable from a failure at the low-noise amplifier 44 based on the level variation of the synthesized signal. The maintainability of the coaxial cable 3 also improves.

Since the arrestor 46 has high impedance with respect to the receiving frequency band, breakdown near the receiving frequency band cannot be detected when the breakdown has occurred in an open mode. However, when a pilot signal is set to a frequency so that the arrestor is not high impedance to the pilot signal, a signal reflected at the arrestor 46 when the arrestor 46 is operating normally is different from a signal when the arrestor breaks down in a open mode. As a result, a reflected signal created at the arrestor is added to the synthesized signal and thus, the breakdown of the arrestor 46 can be detected based on the level variation of the synthesized signal.

Pilot signals with different frequencies can be adopted for detection of the breakdown of the low-noise amplifier, the breakdown of the arrestor, and failure of the cable. Another option is that frequencies are switched among detection of the breakdown of the low-noise amplifier, the breakdown of the arrestor, and failure of the cable. In this way, the maintainability of the low-noise amplifier, the arrestor, and the coaxial cable improves.

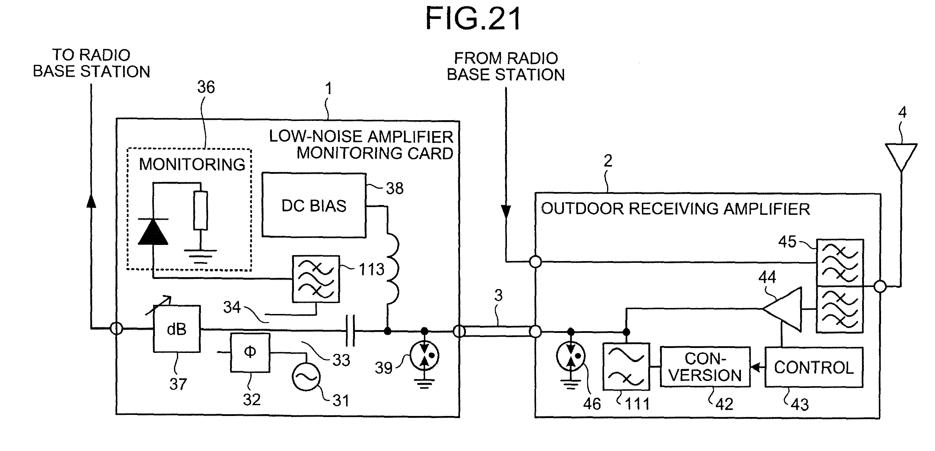

Fig. 21 is a block diagram depicting a structure of a receiving system according to a second embodiment. As depicted in Fig. 21, the receiving system includes in the outdoor receiving amplifier 2, a high-pass filter 111 instead of the second bandpass filter 41, and a converting unit 112 that is configured to perform a frequency conversion instead of the converting unit 42 configured to convert a phase or amplitude, and further includes a bandpass filter 113 corresponding to a converted frequency instead of the first bandpass filter 35 in the low-noise amplifier monitoring card of the indoor apparatus. As a converting unit 112, a frequency multiplier or a frequency divider may be used. As the frequency multiplier, a nonlinear device such as diode or transistor may be used. When the frequency converting unit is a multiplier, the high-pass filter is used but when the converting unit is a divider, a low-pass filter is used. A bandpass filter configured to pass a pilot signal and a converted frequency may be adopted.

For instance, the converting unit 112 operates when the low-noise amplifier 44 is operating normally, and multiples (divides) frequency f0 of a pilot signal to generate a signal with frequency f. When the low-noise amplifier 44 starts operating abnormally, the converting unit 112 stops the multiplying (dividing) based on monitoring information on the low-noise amplifier 44 by the control unit 43. Therefore, detection of a level of a signal with frequency f at the pilot detecting unit 36 enables detection of an abnormal state of the low-noise amplifier 44.

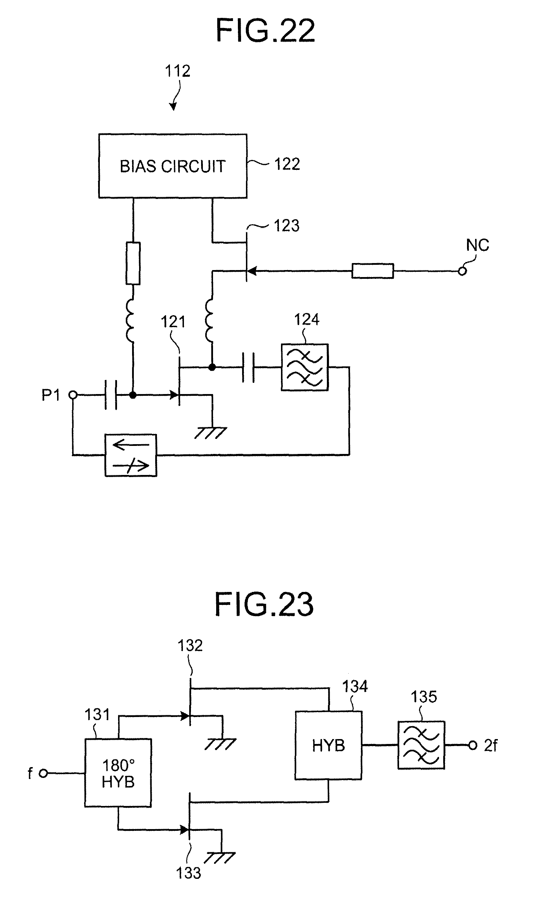

Fig. 22 is a circuit diagram depicting a structure of a converting unit including transistors as a frequency multiplier. As depicted in Fig. 22, a transistor 123 for bias control is inserted between a drain terminal of a transistor 121 and a bias circuit 122. Gate bias voltage of the transistor 123 is controlled by voltage VC of the output node NC of the control unit 43, whereby a bias condition of the transistor 121 changes and a multiplied result created at the transistor 121 also changes. When an original frequency of a pilot signal is f0, an output of the drain terminal becomes f0, 2f0, 3f0, and so on. A desired frequency f is selected with a bandpass filter 124 connected to the drain terminal. In this way, a frequency equal to a multiplied frequency of a signal input to the port P1 is output.

Fig. 23 is a circuit diagram depicting another structure of a converting unit including a transistor as a multiplier. As depicted in Fig. 23, a 180 degree hybrid coupler 131 reverses a phase of an input signal and provides a pair of transistors with signals. A hybrid coupler 134 performs in-phase synthesis to the output from drain terminals of the transistors 132 and 133, and a bandpass filter 135 connected to the hybrid coupler 134 outputs a signal with a doubled frequency compared with a signal input to the hybrid coupler 131. The frequency multiplier is a balance type. When a frequency of an input signal is f0, waves of frequency 2f0 (multiplied by an even number) among multiplied waves are in-phase synthesized. Waves with frequency f0 and 3f0 (multiplied by an odd number) are in reverse phase and are canceled out. In this way, a desired multiplied signal is efficiently obtained. The frequency of the bandpass filter 135 is 2f0.

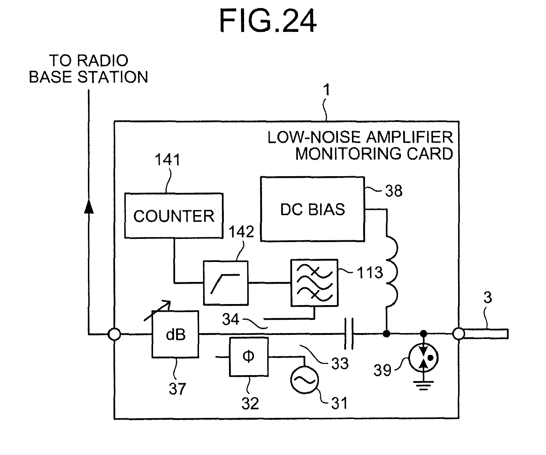

Fig. 24 is a block diagram depicting a structure for detecting a frequency of a signal by a counter. As depicted in Fig. 24, a signal extracted at the second directional coupler 34 and the first bandpass filter 113 is sent to a counter (a monitoring unit) 141 through a limiter 142, and the counter 141 counts the number of waves per unit time to detect a frequency. The other components are identical to those of the first embodiment.

When multiple frequencies are switched depending on an output from the control unit 43, multiple states such as abnormal bias voltage and abnormal temperature can be monitored in a similar manner as the first embodiment. For instance, output is combined in such a manner that a multiplied frequency is output at the abnormal bias voltage and a divided frequency is output at the abnormal temperature. In this case, the bandpass filter 113 may switch combinations corresponding to frequencies or may have a wider band.

According to the second embodiment, the maintainability of the outdoor receiving amplifier 2 and the receiving system improves as the first embodiment. In addition, a pilot oscillator, a pilot detecting unit or a frequency detecting mechanism can be standardized.

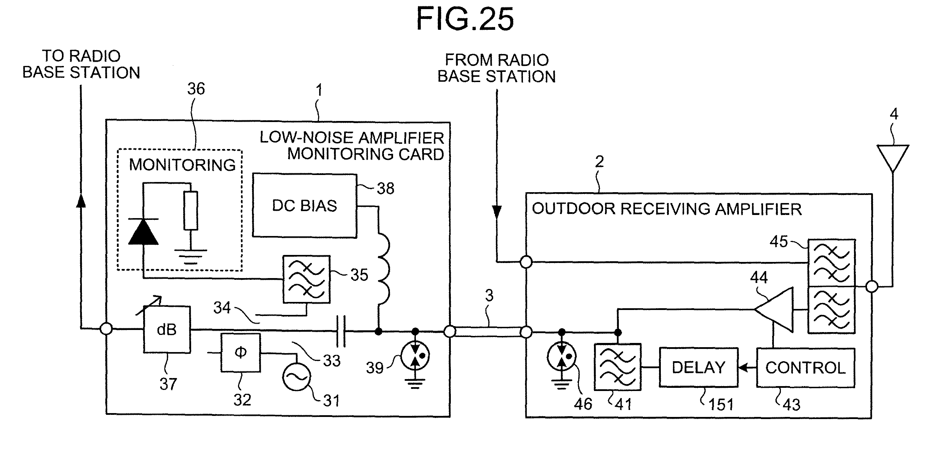

Fig. 25 is a block diagram depicting a structure of a receiving system according to a third embodiment. As depicted in Fig. 25, the receiving system includes a delay unit 151 in the outdoor receiving amplifier 2 of the first embodiment instead of the converting unit 42 configured to convert a phase or amplitude. The pilot oscillator 31 outputs a sinusoidal wave or a rectangular wave during a give period as a pilot signal instead of a continuous sinusoidal wave or rectangular wave as explained in the first or second embodiment.

Based on monitoring information on the low-noise amplifier 44 by the control unit 43, the delay unit 151 changes a delay time depending on whether the low-noise amplifier 44 is operating normally, and outputs a signal responding to the pilot signal. The pilot detecting unit 36 detects time from when the pilot oscillator 31 outputs a pilot signal until a response signal from the delay unit 151 comes back: whereby it is detected that the low-noise amplifier 44 is not operating normally. The response signal to the pilot signal may be a pilot signal reflected at the delay unit 151 as explained in the first embodiment or a signal with a frequency different from that of the pilot signal as explained in the second embodiment. When the frequency is changed, the pilot detecting unit 36 detects a signal with a desired frequency or the frequency detecting mechanism explained above is adopted as explained in the second embodiment.

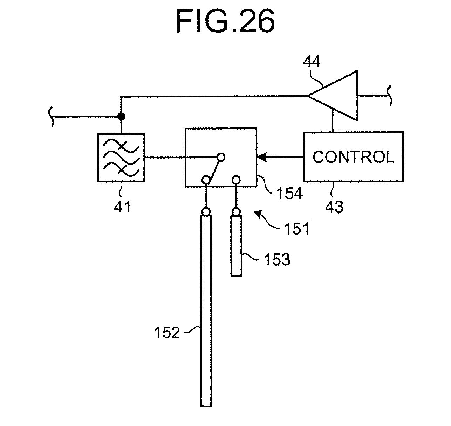

Fig. 26 is a block diagram depicting a structure of the delay unit. As depicted in Fig. 26, a delay time can be changed when a switch 154 switches between a longer delay line and a shorter delay line based on the monitoring information on the low-noise amplifier 44 by the control unit 43.

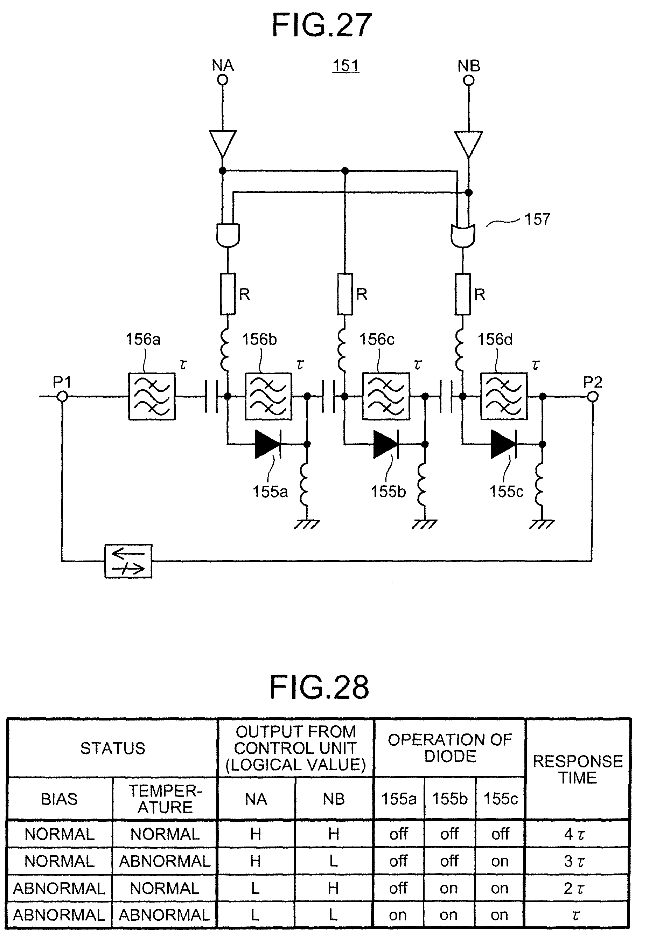

Fig. 27 is a circuit diagram depicting another structure of the delay unit. As depicted in Fig. 27, delay filters 156a to 156d are inserted between the input port P1 and the output port P2, and PIN diode switches 155a to 155c are connected in parallel to delay filters other than the delay filter 156a. The delay filters 156a to 156d have a delay τ at the frequency of the pilot signal. A response time can be changed when a logic unit 157 switches between switches 155a to 155c based on the monitoring information on the low-noise amplifier 44 by the control unit 43.

Fig. 28 is a table depicting a relationship between a response time and outputs of the output nodes NA and NB of the control unit 43. As depicted in Fig. 28, when the output node NA provides a high level output and the output node NB also provides a high level output, namely when the bias voltage and the temperature of the amplifying transistor 51 is normal, all the switches 155a to 155c turn off. Consequently, an input signal passes through four delay filters 156a to 156d so that the response time becomes 4τ. When the output node NA provides a high level output and the output node NB provides a low level output, namely when the bias voltage of the amplifying transistor 51 is normal but the temperature is not normal, the switch 155c turns on and a signal bypasses the delay filter 156d to pass through three delay filters 156a to 156c whereby the response time becomes 3τ. When the temperature of the transistor 51 is normal but the bias voltage is not normal, the switches 155b and 155c turn on and a signal bypasses the delay filters 156c and 156d whereby the response time become 2τ. When both the bias voltage and the temperature of the amplifying transistor 51 are not normal, all the switches 155a to 155c turn on whereby the response time becomes τ.

As explained above, the response time is switched to be τ to 4τ corresponding to monitoring information such as bias voltage and temperature. Further, when the coaxial cable 3 is dislocated from a connecting part of the outdoor receiving amplifier 2 or the coaxial cable 3 is damaged, a signal is reflected at a point where a failure occurs, whereby the response time becomes smaller than τ(<τ). As a result, the state of the outdoor receiving amplifier 2 can be monitored when the pilot detecting unit detects a difference of the response times. In Fig. 27, filters have the same delay time τ but a second and third delay filter with different delay times may be used. In Fig. 27, the delay filters are connected in series but the configuration depicted in Fig. 17 may be used to switch filters having different delay times.

As a delay filter, a surface acoustic wave (SAW) filter may be used. In this case, since a surface acoustic wave whose velocity of transmission is slower than that of an electrical signal is used, a larger amount of delay can be obtained in a smaller size. The other components are identical to that of the first embodiment.

According to the third embodiment, the maintainability of the outdoor receiving amplifier 2 and the receiving system improves as the first embodiment. Further, when the coaxial cable 3 is dislocated from a connecting part of the outdoor receiving amplifier 2, when the coaxial cable 3 is damaged, or when the arrestor 46 breaks down, a pilot signal is reflected at a point where a failure occurs, whereby the time until a response signal, corresponding to a pilot signal, comes back becomes shorter compared to a response time when the low-noise amplifier 44 is operating normally or a response time when the low-noise amplifier 44 is not operating normally. Therefore, the maintainability of the coaxial cable 3 improves and the breakdown of the arrestor 46 can be detected. In addition, a pilot oscillator, a pilot detecting unit or a frequency detecting mechanism can be standardized.

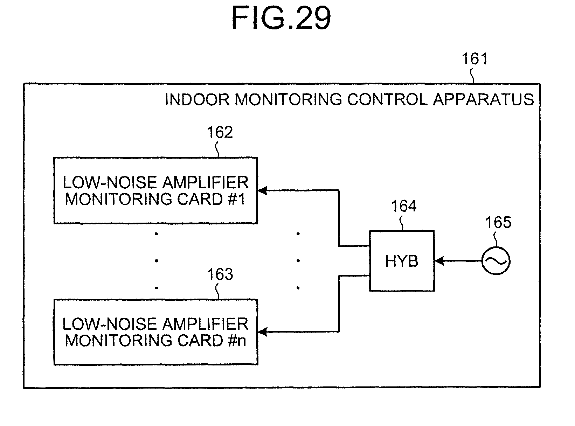

When multiple low-noise amplifier monitoring cards 162 and 163 are included in an indoor monitoring control apparatus 161 in the first to the third embodiments as depicted in Fig. 29, a pilot oscillator 165 shared by the low-noise amplifier monitoring cards 162 and 163 may be set so that the hybrid coupler 164 distributes a pilot signal to each of the low-noise amplifier monitoring cards 162 and 163. In this way, costs are reduced compared to a conventional configuration where a pilot oscillator is set to each of the outdoor receiving amplifier.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. A receiving system comprising:
a first apparatus and a second apparatus, the first apparatus and the second apparatus being connected through a transmission line, wherein
the first apparatus includes:
an amplifier that amplifies a received signal, the signal amplified being transmitted to the second apparatus,
a converting unit that reflects a pilot signal transmitted from the second apparatus through the transmission line and changes characteristics, and
a control unit that controls the converting unit based on information obtained by monitoring the amplifier; and
the second apparatus includes:
a pilot output unit that outputs the pilot signal, and
a monitoring unit that monitors the first apparatus based on a level of a synthesized signal synthesized from the pilot signal output from the pilot output unit and a reflected signal that is from the first apparatus and includes the pilot signal reflected at the converting unit.

2. The receiving system according to claim 1, wherein the converting unit changes a phase of the pilot signal when the converting unit reflects the pilot signal.

3. The receiving system according to claim 1 or 2, wherein the converting unit amplifies the pilot signal when the converting unit reflects the pilot signal.

4. The receiving system according to claim 1 or 2, wherein the converting unit attenuates the pilot signal when the converting unit reflects the pilot signal.

5. A receiving system comprising:
a first apparatus and a second apparatus, the first apparatus and the second apparatus being connected through a transmission line, wherein
the first apparatus includes:
an amplifier that amplifies a received signal, the signal amplified being transmitted to the second apparatus,
a converting unit that changes a frequency of a pilot signal transmitted from the second apparatus through the transmission line, and
a control unit that controls the converting unit based on information obtained by monitoring the amplifier; and
the second apparatus includes:
a pilot output unit that outputs the pilot signal, and
a monitoring unit that monitors the first apparatus based on a frequency of the pilot signal that comes back from the converting unit.

6. The receiving system according to claim 5, wherein the converting unit multiplies the frequency of the pilot signal.

7. The receiving system according to claim 5, wherein the converting unit divides the frequency of the pilot signal.

8. A receiving system comprising:
a first apparatus and a second apparatus, the first apparatus and the second apparatus being connected through a transmission line, wherein
the first apparatus includes:
an amplifier that amplifies a received signal, the signal amplified being transmitted to the second apparatus,
a delay unit that delays and reflects a pilot signal transmitted from the second apparatus through the transmission line, and
a control unit that controls the delay unit based on information obtained by monitoring the amplifier; and
the second apparatus includes:
a pilot output unit that outputs the pilot signal, and
a monitoring unit that monitors the first apparatus based on a time from when the pilot signal is output from the pilot output unit until the pilot signal comes back after the pilot signal is reflected at the delay unit.

9. The receiving system according to claim 8, wherein the delay unit changes a delay time by switching lengths of delay lines.

10. The receiving system according to claim 8, wherein the delay unit changes a delay time by switching delay filters.

11. The receiving system according to any one of claims 1 to 10, further comprising a filter that separates the received signal output from the amplifier and the pilot signal, wherein
the amplifier has a return loss that is large in a frequency band of the received signal and is small at a frequency of the pilot signal, and
the filter has a return loss that is small in the frequency band of the received signal and is large at the frequency of the pilot signal.

12. The receiving system according to any one of claims 1 to 11, wherein the control unit monitors bias current or bias voltage of the amplifier.

13. The receiving system according to any one of claims 1 to 12, wherein the control unit monitors temperature near the amplifier and temperature around the first apparatus.
